# EUROPEAN PATENT SPECIFICATION

(11) **EP 2 903 210 B1**
(45) Date of publication and mention of the grant of the patent: **17.08.2016**
(21) Application number: 14153532.8
(22) Date of filing: 31.01.2014
(51) Int. Cl.: H04L 12/24, H04L 12/26

(54) **A method for monitoring the status of a communication network, and associated communication network**
Verfahren zur Überwachung des Zustands eines Kommunikationsnetzwerks und zugehöriges Kommunikationsnetzwerk
Procédé de surveillance de l'état d'un réseau de communication et réseau de communication associé

(43) Date of publication of application: 05.08.2015
(73) Proprietor: ALCATEL LUCENT, 92100 Boulogne-Billancourt (FR)
(72) Inventor: Ghamri-Doudane, Samir, 91620 Nozay (FR); Bennacer, Leila, 92260 Fontenay aux Roses (FR)
(74) Representative: Berthier, Karine

(56) References cited:
- US-A1- 2012 005 533
- AMINE MECHRAOUI ET AL: "On-line Distributed Bayesian decision and diagnosis of Wireless Networked mobile robots", CONTROL&AUTOMATION (MED), 2010 18TH MEDITERRANEAN CONFERENCE ON, IEEE, PISCATAWAY, NJ, USA, 23 June 2010 (2010-06-23), pages 598-603, XP031731968, ISBN: 978-1-4244-8091-3
- "Diagnosis of TCP Overlay Connection Failures usingBayesian Networks", ACM, 2 PENN PLAZA, SUITE 701 - NEW YORK USA, 30 September 2006 (2006-09-30), XP040047673,

## Description

### FIELD OF THE INVENTION

The present invention relates to monitoring the status of elements of a communication network.

### BACKGROUND OF THE INVENTION

A communication network is usually an infrastructure constituted of many entities. A large communication network providing multiple services has great complexity due to the large number of entities involved.

An issue occurring on one of the entities may impact other entities, by cascading on them, harming then the communication network. For example, a router of a network, that experiences degraded performances, may be a congestion point in the said network. If the congestion is not resolved, it may extend to other routers or servers from the network which is then unable to deliver on time the transiting data.

Due to the complexity of the communication network, the identification of the origin of a failure is difficult. In the example of the congestion of a router that is spreading to other routers or servers, at some point the overall congestion of the network renders the identification of the first faulty router uneasy.

It becomes then crucial to manage efficiently faults in a communication network, by detecting and localizing precisely the potential issues experienced by the equipments of the network.

The fault diagnosis for identifying the root cause of a failure is usually achieved manually by human operators based on expert knowledge, history of reported failures, or testing procedures. This methodology becomes less adapted to the increasing complexity of communication networks, as manual operations are time consuming, prone to errors and do not anticipate issues.

Semi-autonomous techniques exist to remedy partially an inefficient manual methodology. Such techniques usually involve representing the topology and the dependency links between the elements of the communication network. Said representation is then used to monitor key elements of the communication network. However, the said representation is likely to be pre-defined by a human operator and the gathering and use of the information to build an accurate representation has to be performed at a central point, such as a supervision manager of the whole communication network. Centralization and human operations renders such technique still unpractical to monitor and manage failures accurately and efficiently.

US Patent Application Publication US2012/005533 A1 provides a method and an apparatus for performing cross-host root cause diagnosis within a complex multi-host environment.

The present invention aims to remedy the drawbacks described herein above by providing a solution to monitor the status of the communication network, the solution being distributed amongst the elements of the said communication network.

### SUMMARY OF THE INVENTION

The invention aims to remedy all or some of the disadvantages of the above identified prior art. It particularly proposes to monitor the status of the communication network, in each elements of the communication network.

A first aspect of the invention relates then to a distributed method for monitoring the status of a communication network comprising a first network element and a second network element, said first network element and second network element being neighbors and comprising respectively a first module and a second module, said method comprising the following steps performed by the first module:
- establishing a first connection between the first module and the second module,
- collecting regularly from a first function of the first network element, a first observation comprising a first metric representative of a status of said first function,
- receiving regularly from the second module, a second observation comprising a second metric representative of a status of a second function of the second network element,
- updating regularly a first node and a second node of a first dependency model comprised in the first module, said first node being updated with the first metric from the collected first observation and said second node being updated with the second metric from the received second observation, said first dependency model being representative of the status of the communication network.

Thus, thanks to these features, the method allows establishing the status of the communication network through the first dependency model, handled by the first network element. These features are advantageous for monitoring the status of the communication network since the representation of the said status is localized on the first network element.

According to various embodiments, such distributed method for monitoring the status of a communication network comprises one or more of the features below, which should be considered in any possible technical combinations:
- the first module performs the following steps:
   ∘ establishing a second connection with a third module comprised in a third network element, said third network element being a neighbor of the first network element,
   ∘ receiving, through the first connection, regularly from the third module, a third observation comprising a third metric representative of a status of a third function of the third network element,
   ∘ updating regularly a third node of the first dependency model said third node being updated with the third metric from the received third observation,
- the first module sends regularly to the third module, the first observation and the received second observation,
- the first module sends regularly to the second module, the first observation and the received third observation.

In a second aspect, the invention deals with a first network element comprised in a communication network, said first network element being neighbor of a second network element comprised in the communication network, and said first network element comprising a first module that further comprises:
- means for establishing a first connection between the first module and a second module comprised in the second network element,
- means for collecting regularly from a first function, a first observation comprising a first metric representative of a status of said first function of the first network element,
- means for receiving, through the first connection, regularly from the second module a second observation comprising a second metric representative of a status of a second function of the second network element,
- means for updating regularly a first node and a second node of a first dependency model comprised in the first module, said first node being updated with the first metric from the collected first observation and said second node being updated with the second metric from the received second observation, said first dependency model being representative of the status of the communication network.

Thus, thanks to these features, the first network element is adapted to establish the status of the communication network according to the first dependency model managed by the first module. These features are advantageous for the communication network in which the first network element updates autonomously the representation of the status of the said communication network.

According to various embodiments, such first network element comprises one or more of the features below, which should be considered in any possible technical combinations:
- a third network element comprised in the communication network is a neighbor of the first network element, and first module further comprises:
   ∘ means for establishing a second connection between the first module and a third module comprised in the third network element,
   ∘ means for receiving regularly from the third module, a third observation comprising a third metric representative of a status of a third function of the third network element,
   ∘ means for updating a third node of the first dependency model said third node being updated with the third metric from the received third observation.
- the first module is further adapted to send regularly to the third module, the first observation and the received second observation,
- the first module is further adapted to send regularly to the second module, the first observation and the received third observation.

### BRIEF DESCRIPTION OF THE FIGURES

Some embodiments of the present invention are now described, by way of example only, and with reference to the accompanying drawings, in which:
- FIG. 1 is a schematic block diagram of a communication network according to the invention,
- FIG. 2 is a flowchart showing steps of a distributed method for monitoring the status of a communication network according to the invention,
- FIG. 3 is a schematic block diagram of observations according to the invention,
- FIG. 4 is a flowchart showing steps for initializing a distributed method for monitoring the status of communication network according to the invention,
- FIG. 5 is another schematic block diagram of observations from functions of a communication network according to the invention,
- FIG. 6a is a schematic block diagram of a dependency model according to the invention,
- FIG. 6b is another schematic block diagram of a dependency model according to the invention,
- FIG. 6c is another schematic block diagram of a dependency model according to the invention.

The same reference number represents the same element to the same type of element on all drawings, unless stated otherwise.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

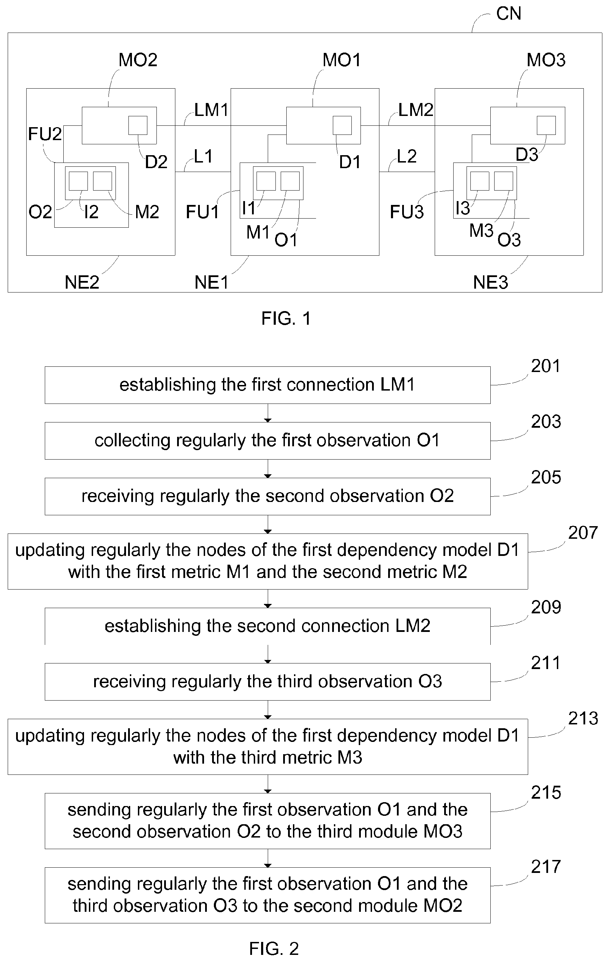

Referring to FIG. 1, a schematic block diagram of a communication network CN according to the invention is depicted.

In order to ease the understanding of the invention, a simplified communication network CN is described. In an embodiment, the communication network CN comprises:
- a first network element NE1,
- a second network element NE2,
- a third network element NE3,
- the first network element NE1 and the second network element NE2 being neighbors, are connected with a connection L1,
- the third network element NE3 and the first network element NE1 being neighbors, are connected with a connection L2.

The communication network CN may be any kind of network for carrying any kind of communication. It may be a circuit switch network or a data packet network. In a non limiting example, the communication network CN is a Virtual Private Network (VPN) backbone to inter-connect a first site with a second site, the first site being connected to the second network element NE2 being a Provider Edge (PE) node and the second site being connected to the third network element NE3, said third network element NE3 being another PE node. In this example the first connection L1 and second connection L2 are Labeled Switch Paths (LSP). In other limiting examples, the communication network is an optical network or a Digital Subscriber Line (DSL) network.

It has to be noted that the communication network CN is a simplified example of a larger network. In non limiting example, the said larger network comprises a large number of network elements, interconnected according to any kind of topology.

It is meant by the first network element NE1 and the second network element NE2 being neighbors, that the said elements are direct neighbors. They either are adjacent nodes within the physical topology and being connected with a physical connection, or they are direct neighbors in an overlay topology on top of the physical topology and being connected with a logical link.

The first network element NE1 further comprises:
- a first function FU1, which status can be represented by a first metric M1,
- a first module M01, to process metrics such as the first metric M1, and to update a first dependency model D1 with metrics such as the first metric M1, and any other available metric

Similarly, the second network NE2 further comprises:
- a second function FU2, which status can be represented by a second metric M2,
- a second module M02, to process metrics such as the second metric M2 and/or the first metric M1, and to update a second dependency model D2 with metrics such as the second metric M2 and/or the first metric M1, and any other available metric.

Similarly, the third network NE3 further comprises:
- a third function FU3, which status can be represented by a third metric M3,
- a third module M03, to process metrics such as the third metric M3, and/or the second metric M2 and/or the first metric M1, and to update a third dependency model D3 with metrics such as the third metric M3, and/or the second metric M2 and/or the first metric M1, and any other available metric.

In a non limiting example, the communication network is a VPN backbone, the second network element NE2 and the third network element NE3 being PE node, and the first network element NE1 being a provider node.

In another non limiting example, the first network element NE1, the second network element NE2 and the third network element NE3 are optical switches from the communication network CN that is an optical network.

In another non limiting element, the first network element NE1, the second network element NE2 and the third network element NE3 are wireless relays.

The first function FU1 is a function from the first network element NE1. In a non limiting example the first function FU1 enables the said element to fulfill its role in the communication network CN, such as processing received data packets from a data communication. The said first function FU1 may be in non limiting examples, traffic congestion monitoring, Quality of Service (QoS monitoring), or jitter of packet delay budget (PDB) management, or load balancing (LB) of the equipment.

The first metric M1 is a metric representative of the status of the function FU1. It indicates information on said function. In a non limiting example, if the first function FU1 is a traffic congestion monitor, the first metric M1 is an indicator of congestion status. In another non limiting example, if the first function FU1 is a packet delay budget management, the first metric may indicates the lowest packet delay variation, the average packet delay variation and the highest packet delay variation. In yet another non limiting example, if the first function FU1 is a bandwidth manager, the first metric M1 may be for example the remaining usable bandwidth.

Similarly the second function FU2 is a function from the second network element NE2. The second function FU2 may fulfill on the second network NE2 the same role as the first function FU1, but it can be a different one. The second function FU2 may be an availability function of the second network NE2 and the first function FU1 may be a packet loss counter in a non limiting example.

The second metric M2 is a metric representative of the status of the second function FU2, providing information on said function.

Similarly the third function FU3 is a function from the third network element NE3. The third function FU3 may fulfill on the third network NE3 the same role as the first function FU1 or the second function FU2, but it can be a different one. The third function FU3 may be a LSP connectivity manager of the third network NE3 whereas the first function FU1 and second function FU2 may be respectively alarms monitors on the first network element NE1 and on the second network element NE2.

The third metric M3 represents info of the status of the third function FU3, providing information on said function.

In order to facilitate the presentation of the invention, each network element of the communication network CN has been described with a single function associated with a single metric. It has to be noted that this is a non restrictive embodiment and that in other non limiting examples, a network element may fulfill several functions, and each of these functions may be associated with one or more metrics.

The first metric M1 is comprised in a first observation 01 established by the first function FU1. Similarly the second function FU2 manages a second observation 02 that comprises the second metric M2, and the third function FU3 manages a third observation 03 that comprises the third metric M3.

In an embodiment, the first observation 01 is a tuple that further comprises a first identifier I1. The first identifier I1 provides information to identify the first metric M1 of the first function FU1 of the first network element NE1. In a non limiting example, the first identifier I1 combines information that allows identifying the first network element NE1, the first function FU1 and the first metric M1. Similarly the second observation 02 is a tuple that further comprises a second identifier I2 that provides information to identify the second metric M2 of the second function FU2. The third observation also further comprises a third identifier I3 that provides information related to the third metric M3 from the third function FU3.

The first module M01, comprised in the first network element NE1, is a module to process the observations such as the first observation 01, or the second observation 02, or the third observation 03. The first module M01 extracts from the said observations, the embedded metrics such as the first metric M1, or the second metric M2, or the third metric M3, in order to process them.

The first module M01 comprises means to interrogate the first function FU1 to collect the first observation 01. The first module may for example connect to the first function FU1 through an interface and use a protocol to request the first observation 01. In a non limiting example, the first function FU1 and the first module M01 interacts by exchanging messages through software means, operated on a hardware bus. The first module M01 comprises also means to store the first observation 01.

Similarly to the first module M01, the second M02 comprises means to interrogate the second function FU2 to retrieve the second observation 02. Said second module M02 comprises also storage means for the second observation 02.

Similarly to the first module M01 and the second module M02, the third module M03 comprises means to interrogate the third function FU3 to obtain the third observation 03. The third module M03 is also adapted to save the third observation 03.

The first module M01 and the second module M02 are adapted to connect together and to exchange data through a first module connection LM1. The said first module M01 and second module M02 can exchange data over the first module connection LM1. In particularly the first module connection LM1 is adapted to exchange between the first M01 and second M02 modules, metrics such as the first metric M1, the second metric M2 or the third metric M3, said metrics being carried over the first module connection LM1 respectively by the first observation 01, the second observation 02 and the third observation 03.

Similarly the first module M01 and the third module M03 comprise means for connecting together through the second module connection LM2. The said first M01 and third module M03 can exchange data over the second module connection LM2. In particularly the second module connection LM2 is adapted to convey between the first M01 and third M03 modules, observations such as the first observation 01, the second observation o2 or the third observation o3.

In non limiting examples, the first module connection LM1 and the second module connection LM2 are respectively independent links using specific interfaces and protocols. In other non limiting examples, the first module connection LM1 is carried over by the first connection L1, and the second module connection LM2 is carried over by the second connection L2.

The first module M01 further comprises the first dependency model D1. It is meant by dependency model herein after, a model or representation comprising nodes, a node being an observed metric, and each observed metric being associated to a node. The links between nodes characterize the dependency between each pair of metrics. A dependency model, managed by a module of a network element, comprises nodes and links for all the monitored functions of the network elements from the communication network CN, the dependency model being then a representation of the status of the communication network CN as evaluated by the said module of the said network element.

The first module M01 is adapted to update the first dependency model D1 by updating nodes of the said first dependency model D1. Said nodes are associated to metrics such as the first metric M1 and/or the second metric M2 and/or the third metric M3. An update of the first dependency model D1 is then achieved by updating a first node of the first dependency model D1 with the first metric M1. Similarly the first module M01 updates the first dependency model D1 with the second metric M2 of the received second observation 02, by modifying a second node of the first dependency model D1 with the said second metric M2. In another embodiment, the first module M01 is adapted to update the first dependency model D1 with the third metric M3 from the third observation 03, by updating a third node of the first dependency model D1 with the said third metric M3.

In another embodiment the first module M01 comprises mean to update the first dependency model D1 with one or more metrics at the same time.

The first module M01 uses the said metrics, extracted from the observations, as inputs to build the first dependency model D1. The said first dependency model D1 gathers status information from the first function FU1 through the first metric M1, and also gathers status information from the second network element NE2 and the third network element NE3 through respectively the second metric M2 and the third metric M3. The first dependency model D1 is then constructed to be representative of the status of the communication network CN, as perceived by the first module M01 from the first network element NE1.

Analogously, the second module M02 further comprises the second dependency model D2. The second module M02 updates nodes of the second dependency model D2, with metrics such as the first metric M1 and/or the second metric M2 and/or the third metric M3, that are respectively taken from the first observation 01 and/or the second observation 02 and/or the third observation 03. The second module M02 updates a first node of the second dependency model D2 with the first metric M1, a second node of the second dependency model D2 with the second metric M2, and a third node of the second dependency model D2 with the third metric M3.

The second module M02 uses the said metrics as inputs to build the second dependency model D2. The said second dependency model D2 gathers status information from the second function FU2 through the second metric M2, and also gathers status information from the first network element NE1 and the third network element NE3 through respectively the first metric M1 and the third metric M3. The second dependency model D2 is then built to be representative of the status of the communication network CN, as perceived by the second module M02 from the second network element NE2.

In the same manner, the third module M03 further comprises the third dependency model D3. The third module M03 updates the third dependency model D3 with metrics such as the third metric M3 and/or the first metric M1 and/or the second metric M2, that are respectively obtained from the third observation 03 and/or the first observation 01, and/or the second observation 02. The third module M03 updates a first node of the third dependency model D3 with the first metric M1, a second node of the third dependency model D3 with the second metric M2 and a third node of the third dependency model D3 with the third metric M3.

The third module M03 uses the said metrics as inputs to build the third dependency model D3. The said third dependency model D3 gathers status information from the third function FU3 through the third metric M3, and also gathers status information from the first network element NE1 and the second network element NE2 through respectively the first metric M1 and the second metric M2. The third dependency D3 is then updated to be representative of the status of the communication network CN, as perceived by the third module M03 from the third network element NE3.

In an embodiment the first dependency model D1 is a Bayesian network. Similarly the second dependency model D2 and the third dependency model D3 are Bayesian networks.

A Bayesian network is a directed acyclic graph in which the set of nodes represent random variables over a multi-valued domain. The set of directed edges of the said graph represents an existence of causal relationships between variables. The strengths of these dependencies are specified by conditional probabilities. In a non limiting example, the dependencies are evaluated by a Chi-Square test which is a statistical test for assessing observed data. In this non limiting example, the Chi-Square test is used to test the validity of the links of the Bayesian network, said links corresponding to dependencies between nodes, and said nodes representing observed metrics.

Hence, each network element from the communication network CN builds independently a dependency model representative of the status of the said communication network. In a non limiting example, the first dependency model D1, the second dependency model D2 and the third dependency model D3 may be representing the same status of the communication network, meaning that they were built identically. In another non limiting example, the said first D1, second D2 and third D3 dependency models may not be identical and presenting variations corresponding to different perception of the metrics as processed by the modules from the network elements.

Referring to figure FIG. 2, a flowchart showing steps of a distributed method for monitoring the status of a communication network, according to the invention, is depicted. In this embodiment, the distributed method comprises steps performed by the first module M01, as described herein below.

In a first step 201, the first module M01 establishes the first module connection LM1 with the second module M02.

In a non limiting example, the first module M01 and the second module M02 have knowledge of the respective neighbors of the first network element NE1 and the second network element NE2 respectively.

In another non limiting example, the first module M01 and the second module M02 interrogate the respective first network element NE1 and the second network element NE2 to retrieve the list of neighbors.

In yet another non limiting example, the first module M01 further comprises neighbor discovery ability.

In a second step 203, the first module M01 collects from the first function FU1, the first observation 01 that comprises the first metric M1 representative of the status of the first function FU1 of the first network element NE1. The said collection is done a first time, and is then performed regularly.

It is meant by a regular collection of the first observation 01, that the said collection is performed multiple times over time. These multiple collections may be done at any time with no pattern, or they may be achieved according a pre-defined pattern, or they also may be performed according to a given periodicity.

Regular retrieval of the first observation 01 allows monitoring the first metric M1 and then the modification of status of the first function FU1. In a non limiting example, if the first function FU1 is a data traffic manager, the first metric M1 may be evaluated at a rate matching the averaged evolution of the said data traffic. Moreover, the first module M01 is adapted to store the records of the first observation 01, and is able to keep a plurality of updated first observation 01 over the time.

It is meant by the term regularly herein after, a repetition over time of an operation and/or an action. In a non limiting example, the term receiving regularly is to be interpreted as an operation of receiving, said operation occurring multiple times over time.

In a third step 205, the first module M01 receives the second observation 02 from the second module M02, said second observation 02 comprising the second metric M2 which is representative of the status of the second function FU2 from the second network element NE2. The first module M01 and the second module M02 are exchanging the second observation 02 through the first connection LM1. The reception of the second observation 02 is also done regularly. On the second network element NE2, the second module M02 collects regularly the second observation 02 by evaluating multiple times the second metric M2 of the second function FU2, in order to monitor the evolution of the status of said second function FU2. Then the second module M02 sends the second observation 02 on a regular basis to the first module M01.

In a fourth step 207, the first module M01 updates a first node of the first dependency model D1 with the first metric M1. Said first metric M1 is extracted from the collected first observation 01. It updates also a second node of the first dependency model D1 with the second metric M2 comprised in the second observation 02. The updating of the first node and second node of the first dependency model D1 is performed regularly, so that the first dependency model D1 is updated to reflect the evolution of the first metric M1 and the second metric M2 that may be modified over time, and that are exchanged regularly over time.

In another embodiment not depicted on figure FIG. 2, in the fourth step 207, the first dependency model D1 is updated with the first metric M1 from the most recently collected first observation 01 and the previously stored first observation 01, in order to smooth the updating of the first dependency model D1.

It has to be noted that the executions of the second step 203, the third step 205 and the fourth step 207 may be performed on the same regular basis in a non limiting example, but in another non limiting example, each execution of the said steps may be done independently with specific time duration between two successive operations.

In another embodiment, in a fifth step 209, the first module M01 establishes the second module connection LM2 with the third module M03. Said second module connection LM2 may be similar to the first connection module LM1, in terms of characteristics in a non limiting example, but in another non limiting example the said connections are different, and the second module connection LM2 is adapted to allow messages and data exchanges between the first module M01 and the third module M03.

In a sixth step 211, the first module M01 receives regularly from the third module M03, the third observation 03 that comprises the third metric M3 representative of the third function FU3 from the third network element NE3.

In a seventh step 213, the first module M01 updates the third node of the first dependency model D1 with the third metric M3 comprised in the third observation 03. Said update of the third node is performed regularly, so that the updated first dependency model D1 reflects accurately the status of the third function FU3 of the third network element NE3.

In another embodiment, in an eighth step 215, the first module sends regularly to the third module M03, the regularly collected first observation 01 and the second observation 02 that was received previously, and on a regular basis, by the first module M01. In a non limiting example, the first module M01 sends to the third module M03 every observations available on the first module M01.

In another embodiment, in a ninth step 217, the first module sends regularly to the second module M02, the collected first observation 01 and the received third observation 03. In a non limiting example, the first module M01 sends to the second module M02 every observations available on the first module M01. In another non limiting example, the first module M01 sends to the second module M02 every observations it has received from the direct neighbors of the first network element NE1, except the metrics that were previously received from the said second module M02, in order to optimize the resource usage of the first module connection LM1, or to avoid duplicate metrics processing.

In another embodiment not depicted on figure FIG. 2, the second module M02 updates the second dependency model D2 by updating every nodes from the second dependency model D2 with the respective associated observations. Namely the second module M02 updates a first node, a second node and a third node respectively comprised in the second dependency model D2:
- the first node is modified according to the first metric M1 from the received first observation 01,
- the second node is updated with the second metric M2 from the collected second observation 02,
- the third node is changed to reflect the third metric M3 from the received third observation 03.

The second module M02 has then received every available metrics, namely the first metric M1, the second metric M2 and the third metric M3. With the reception of every available observations the second module M02 updates then the second dependency model D2 with the received metrics and the second metric M2, so that the said second dependency model D2 is representative of the status of the communication network CN, as observed by the second module M02 located on the second network element NE2.

In a non limiting example, the first module M01 sends every observations available on said first module M01 to the second module M02, said second module M02 filters said second observation 02 because it is already known from the second module M02 or form previous reception of observations from other network elements.

In another non limiting example, the first module M01 sends every observations available on said first module M01 to the second module M02, except the second observation 02, to the second module M02.

In an embodiment not depicted on figure FIG. 2, in an additional step, the third module M03 updates the third dependency model D3 representative of the status of the communication network CN, as observed by the third module M03 comprised in the third network element NE3. Said updates of the third dependency model D3 is performed by updating a first node, a second node and a third node respectively comprised in the third dependency model D3, with the metrics from every available observations on the third module M03. The said available observations are the received first observation 01, the received second observation 02 and the collected third observation 03.

In an embodiment, the first step 201, the second step 203, the third step 205, the fourth step 207, the fifth step 209, the sixth step 211, the seventh step 213, the eighth step 215, the ninth step 217 and all others possible steps are performed asynchronously. It is meant by asynchronously for example that each of the steps executed by the first module M01 are performs independently.

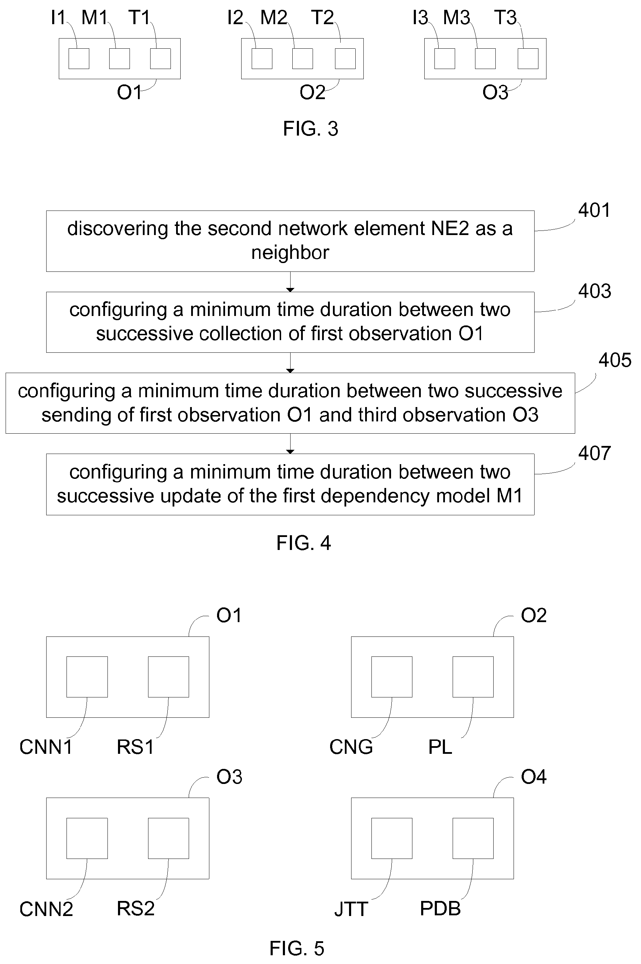

Referring to figure FIG. 3, a schematic block diagram of observations according to the invention is depicted.

In an embodiment, the first observation 01 further comprises:
- a first identifier I1 that identifies the first metric M1,
- the first metric M1, retrieved from the first function FU1, and,
- a first time reference T1, providing an instant information related to the first metric M1.

In a non limiting example, the first identifier I1 is an element identifier. It may be a specific identifier for the purpose of the invention, but it may also be a standardized identifier used to identify network element according to well-known techniques. In a non limiting example, the first identifier I1 allows to identity the first metric M1 and also the first function FU1, and the first network element NE1, said first identifier being a combination of one or more identifiers, identifying each the first function FU1 and the first network element NE1.

In another non limiting example, the first time reference T1 is a timestamp, providing an indication of when the first observation 01 was obtained by the first module M01. In yet another non limiting example, the first function FU1 provides the first time reference T1 that corresponds then to the instant when the said first metric M1 was sampled by the said first function FU1.

The first module M01 is adapted to store the first observation 01, and the variants of said first observation 01 that are collected over time. In a non limiting example, the first time reference T1 allows to differentiate the stored variants of the first observation 01.

In an embodiment, the first module M01 selects the appropriate variant of the first observation 01 by filtering it according to its relevance. In a non limiting example, the first module M01 filters the first observation 01 by considering the first time reference T1. The first module M01 may ignore a first observation 01 which is outdated compared to a time to live parameter, said parameter being configured on the first module M01. In another non limiting example, the first module M01 performs a filtering on all stored first observations 01 that were recorded over time. In yet another non limiting example, the first module M01 filters the first observation 01 according to the first metric M1, in order to update the first dependency model D1 only when a modification of the first metric M1 is occurring. Similarly the first module filters all received observations, such as the second observation 02 and/or the third observation 03 according to their relevance. In non limiting examples, the filtering criteria are the same for all received observations, but in another case, each received observation is filtered independently.

Analogously to the first observation 01, in this embodiment, the second observation 02 further comprises:
- a second identifier 12 that identifies the second metric M2,
- the second metric M2, retrieved from the second function FU2, and,
- a second time reference T2, providing an instant information related to the second metric M2.

The second module M02 is adapted to store the second observation 02, and the variants of said second observation 02 that are updated over time. In a non limiting example, the second timestamp T2 allows to evaluate the relevancies of the variants of the second observation 02. Said second timestamp T2 may be used to be compared to a discard timer to identify variants of second observations 02 that are too old.

Analogously to the first observation 01, and to the second observation 02, in this embodiment, the third observation 03 further comprises:
- a third identifier I3 that identifies the third network element NE3,
- the third metric M3, retrieved from the third function FU3, and,
- a third time reference T3, providing an instant information related to the third metric M3.

The third module M03 is adapted to store the third observation 03, and the variants of said third observation 03 that are collected over time.

It has to be noted that the first module M01, the second module M02 and the third module M03 are adapted to store the variants of all the received observations. In a non limiting example, the first module M01 stores the received second observation 02 and may sort the said the variants of the received second observation 02 by checking the various values of the second timestamp T2.

Referring to figure FIG. 4, a flowchart showing steps for initializing a distributed method for monitoring the status of communication is depicted.

In this embodiment, the distributed method for monitoring the status of communication network further comprises initialization steps.

In a first initialization step 401, the first module M01 performs a discovery procedure for identifying the equipments from the communication network CN that are adjacent to the first network element NE1. In the exposed embodiment, the first module 1 performs a discovery and identifies the second network NE2 comprising the second module M02, as a neighbor. In a non limiting example, the first module M01 uses the first connection L1 to send discovery packets, in order to locate network elements that are neighbors from the first network element NE1. In another non limiting example, the discovery procedure identifies the third network element NE3 a neighbor of the first network element NE1.

In a second initialization step 403, a minimum time duration between two successive collections of the first observation 01 by the first module M01 is configured on the said module. In a non limiting example, the said minimum time duration is chosen according to the characteristics of the first function FU1, in order for the regular collection of the first metric M1 to reflect accurately the evolution of the processing of the first function FU1. In a non limiting example, the said minimum time duration ensures that the collection of the first observation 01 is done at a sufficient rate for matching the evolutions of the first function FU1.

Similarly in an embodiment not depicted on the figure FIG. 4, the second module M02 and the third module M03 are configured respectively with minimum time durations for collecting respectively the second observation 02 and the third observation 03.

In a third initialization step 405, a minimum time duration between two successive sending of the collected first observation 01 and the received third observation 03 by the first module M01 to the second module M02 is configured. Said minimum time duration ensures that every observations are exchanged frequently enough to match the evolutions of the corresponding functions of the network elements.

Similarly in an embodiment not depicted on the figure FIG. 4, the second module M02 is configured with a minimum time duration between two successive sending of the second observation 02 and every observation previously received by the said second module M02.

Analogously in an embodiment not depicted on the figure FIG. 4, the third module M03 is configured with a minimum time duration between two successive sending of the third observation 03 and every observations previously received by the said third module M03.

In a fourth initialization step 407, a minimum time duration between two successive updates of the first dependency model D1 is configured on the first module M01. The said minimum time duration is independent of the respective minimum time durations of the second initialization step 403 and the third initialization step 405. Updating the dependency model D1 with a minimum time duration between two updates guarantees that the dependency model D1 is updated regularly enough to match to the evolution of the communication network CN.

In an embodiment, the first module M01 provides the first dependency model D1 to a root cause analysis module. Said first dependency model D1 is the current representation of the status of the communication network CN at the instant when the first dependency model D1 is provided to the root cause analysis module. At another instant, the root cause analysis module may be provided with a different version of the first dependency model D1 since it is regularly updated. In a non limiting example a trigger for the providing of the first dependency model D1 is the detection of a failure on the communication network CN. Said root cause analysis module analyzes the first dependency model D1 in order to identify a fault of one of the network elements from the communication network CN. In a non limiting example, the root cause analysis may identify data packet congestion on the second network element NE2 by processing the first dependency model D1.

Referring to figure FIG. 5, another schematic block diagram of observations from functions of a communication network according to the invention is depicted.

In this embodiment, the first observation 01, which is regularly collected by the first module M01, comprises:
- a first identifier CNN1 corresponding to the first identifier 11,
- a router status metric RS1 corresponding to the first metric M1. Said router status metric RS1 is representative of the status of a connectivity function of the first network element NE1.

The second observation 02, which is regularly collected by the second module M02, comprises:
- an identifier CNG corresponding to the second identifier 12,
- a number of packets loss metric PL corresponding to the second metric M2, that provides an indication of the congestion experienced by the function of data packets monitoring on the second network element NE2.

The third observation 03, which is regularly collected by the third module M03 comprises:
- a second identifier CNN2 corresponding to the third identifier 13,
- a router status metric RS2 corresponding to the third metric M3. Said router status metric RS2 is representative of the status of a connectivity function of the third network element NE3.

A fourth network element, not depicted on figure FIG. 5, is neighboring to the third network element NE3. A fourth observation 04, which is regularly collected by a fourth module comprised in the fourth network element, comprises:
- an identifier JTT corresponding to a fourth identifier,
- a packed delay budget metric PDB corresponding to a fourth metric that provides a status on the delay experienced by packets processed by a function of data packets management on the fourth network element.

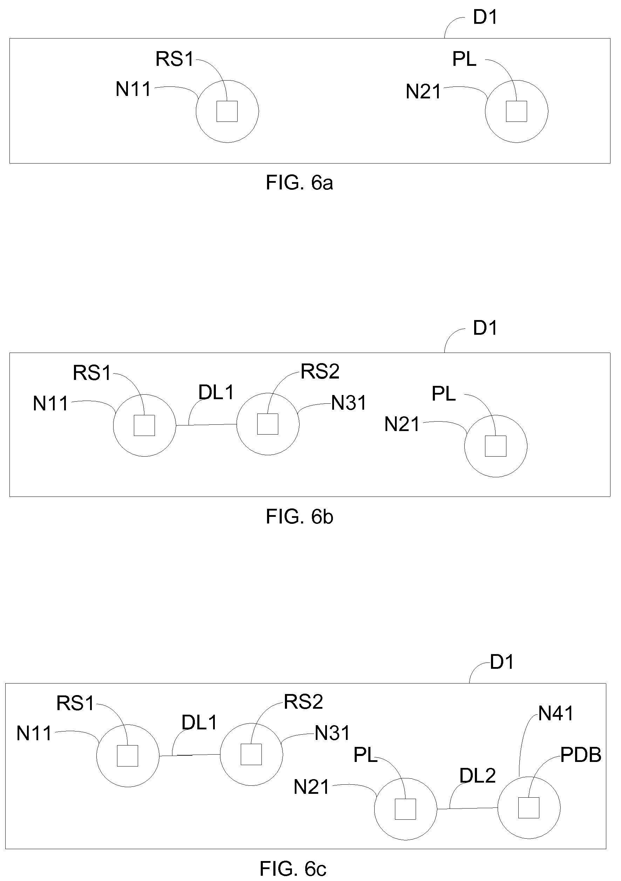

Referring to figure FIG. 6a, a schematic block diagram of a dependency model according to the invention is depicted.

In this embodiment the first dependency model D1 is schematized. It has been previously initialized by a first retrieval of the first observation 01 by the first module M01. The said first module M01 has then received from the second module M02 the second observation 02. The first dependency model D1 is updated with the available observations as inputs. The first node N11 from the first dependency model D1 corresponds to the router status metric RS1, and said first node N11 1 is updated according to the said metric from the retrieved first observation 01. The second node N21 from the first dependency model D1 corresponds to the number of packets loss metric PL, and said second node N21 is updated according to the received second observation 02.

The first module M01 updates regularly the first dependency model D1 by updating on a regular basis the first node N11 and the second node N21 with every available observations.

In a non limiting example, a dependency links between two metrics of different types may be established. Indeed, one function of a network element can impact another function of different type, on the same network element or on a remote one. The role of the dependency model is to represent such complexity on the dependency of functionalities from the network elements of the communication network.

In another non limiting example, the said metrics may be considered as disjoints as they are representative of statuses of different functionalities.

Referring to figure FIG. 6b, another schematic block diagram of a dependency model according to the invention is depicted. In this embodiment the updated first dependency model D1 is schematized.

The third module M03 sends to the first module M01, the third observation 03. The first module M01 stores the third observation 03 and uses this newly received observation to update the first dependency model D1.

The first module M01 uses then every available observations to update the first dependency model D1. The router status metric RS1, from the first observation 01 and the router status metric RS2 from the third observation 03 are representative of connectivity functions for their respective network elements, so these two metrics are linked in the first dependency model D1. This dependency between the first node N11 and the third node N31 is represented by a first dependency link DL1. A branch of the first dependency model D1 comprises then the first node N11, that corresponds to the router status metric RS1, and the third node N31, that corresponds to the router status metric RS2.

In a non limiting example, the relationship between the router status metrics RS1 and RS2 is establish through the first identifier CNN1 and second identifier CNN2 that may comprises the same identification information.

The said first dependency model D1 further comprises another branch with the packet loss metric PL of the congestion control function of the second network element NE2, said congestion rate value being updated regularly.

The first dependency model D1 is then representative of the current status of the communication network CN, by reflecting the status of functions of the network elements from the said communication network CN.

Referring to figure FIG. 6c, another schematic block diagram of a dependency model according to the invention is depicted. In this embodiment the updated first dependency model D1 is schematized.

The fourth module has sent the fourth observation 04 to the third module M03. The said fourth observation 04 is used by the third module M03 to update the third dependency model D3, and is forwarded to the first module M01.

The first module M01 updates then the first dependency model D1 with the newly received fourth observation 04. A fourth node N41 is associated to the packet delay budget metric PDB, said fourth node N41 being updated with said metric. The packet delay budget metric PDB is representative of data packets processing function in the communication network CN, and is linked with the packet loss metric PL. This dependency between metrics is represented by a second dependency link DL2 between the second node N21 and the fourth node N41.

The updated first dependency model D1 is then representative of the current status of the communication network CN, by reflecting the status of functions of the network elements from the said communication network CN.

In another embodiment, the first module M01 is a monitoring device. The said monitoring device performs the method for monitoring the status of the communication network CN.

The monitoring device comprises means to establish the first connection LM1 with the second module M02. In a non limiting example, said means use a protocol and interface for receiving and sending messages with the second module M02. In another non limiting example, the said means allow the first module M01 to establish a connection with every neighbors network elements that are adjacent to the first network element NE1.

The monitoring device further comprises means adapted to interact with the first function FU1, for requesting and retrieving the first observation 01. The said means is adapted to perform this collection of first observation 01 on a regular basis.

The monitoring device also comprises storage means for the regular collection of the first observation 01, and the regular reception of the second observation 02 and/or the third observation 03. In a non limiting example, the storage means uses a database stored on an electronic memory.

The monitoring device further comprises a processing unit to build and update the first dependency model D1. Said processing unit uses the metrics such as the first metric M1, the second metric M2, or the third metric M3 to update the first dependency model D1, by updating the nodes of the said first dependency model D1.

The monitoring device may further comprises communication means to provide the first dependency model D1 to the root cause analysis module.

In a non limiting example, the monitoring device is comprised in the first network element NE1. In another non limiting example, the monitoring device is a standalone device adapted to communicate with the first network element NE1.

In yet other non limiting examples, the second module M2 and the third module M03 are devices similar to the monitoring device.

An advantage of the invention resides in the distributed characteristics of the method to build the representation of the status of the communication network. Each network element operates autonomously to establish a dependency model, each dependency model from each element being then specific. It is advantageous over a centralized method that may not accurately represent the status of the communication network as experienced by each network element of the said network.

The periodic mutual exchange and forwarding of metrics or observations between equipments allows each module to gather a large set of metrics that are related to all the equipments within the managed network or service infrastructure. This ensures the completeness of the constructed dependency model.

In a non limiting example, if one of the network elements becomes offline due to a failure, the other network elements still continues to update their dependency models, that will reflect after mutual exchange of observations, the failure of the faulty network element.

The said dependency models can be then advantageously processed by a root cause analysis, to identify the failure, and to emit directives to a healing module to take actions for solving or elaborating a temporary solution for the failure.

In others non limiting examples, the root cause analysis and the healing module are also distributed on each network element, in order for the network elements to operate autonomously for the management of a failure on the communication network.

It should be appreciated by those skilled in the art that any block diagrams herein represent conceptual views of illustrative circuitry embodying the principles of the invention. Similarly, it will be appreciated that any flow charts, and the like represent various processes which may be substantially represented in computer readable medium and so executed by a computer or processor, whether or not such computer or processor is explicitly shown.

In the claims, any reference signs placed between parentheses shall not be construed as limiting the scope of the claims.

## Claims

1. A distributed method for monitoring the status of a communication network (CN) comprising a first network element (NE1) and a second network element (NE2), said first network element (NE1) and second network element (NE2) being neighbors and comprising respectively a first module (M01) and a second module (M02), said method comprising the following steps performed by the first module (MO1):
- establishing (201) a first connection (LM1) between the first module (M01) and the second module (M02),
- collecting (203) regularly from a first function (FU1) of the first network element (NE1), a first observation (O1) comprising a first metric (M1) representative of a status of said first function (FU1),
- receiving (205), through the first connection (LM1), regularly from the second module (M02), a second observation (02) comprising a second metric (M2) representative of a status of a second function (FU2) of the second network element (NE2),
- updating (207) regularly a first node (N11) and a second node (N21) of a first dependency model (D1) comprised in the first module (M01), said first node (N11) being updated with the first metric (M1) from the collected first observation (O1) and said second node (N21) being updated with the second metric (M2) from the received second observation (02), said first dependency model (D1) being representative of the status of the communication network (CN).

2. A method according to claim 1, further comprising the following steps performed by the first module (MO1):
- establishing (209) a second connection (LM2) with a third module (M03) comprised in a third network element (NE3), said third network element (NE3) being a neighbor of the first network element (NE1),
- receiving (211) regularly from the third module (M03), a third observation (03) comprising a third metric (M3) representative of a status of a third function (FU3) of the third network element (NE3),
- updating (213) regularly a third node (N31) of the first dependency model (D1) said third node (N31) being updated with the third metric (M3) from the received third observation (03).

3. A method according to claim 2, wherein the first module (M01) sends (215) regularly to the third module (M03), the first observation (O1) and the received second observation (02).

4. A method according to claim 2 or to claim 3, wherein the first module (MO1) sends (217) regularly to the second module (M02), the first observation (O1) and the received third observation (03).

5. A method according to claim 4, wherein the second module (M02) updates (219) a first node, a second node and a third node of a second dependency model (D2) comprised in the second module (M02), said nodes being respectively updated with the first metric (M1) from the received first observation (O1), the second metric (M2) from the collected second observation (02), and with the third metric (M3) from the received third observation (03), said second dependency model (D2) being representative of the status of the communication network (CN).

6. A method according to any of the claims 2 to 5, wherein the first observation (O1) further comprises a first identifier (I1) and a first timestamp (T1), the second observation (02) further comprises a second identifier (12) and a second timestamp (T2), and the third observation (03) further comprises a third identifier (13) and a third timestamp (T3).

7. A method according to any of the claims 2 to 6, wherein the first observation (O1), the second observation (02) and the third observation (03) are filtered according to their respective relevancies.

8. A method according claim 7, wherein the first observation (O1) further comprises a first identifier (I1), the second observation (02) further comprises a second identifier (12), the third observation further comprises a third identifier (13), and wherein the first timestamp (T1), the second timestamp (T2) and the third timestamp (T3) are criteria for the respective relevancies of the first observation (O1), the second observation (02) and the third observation (03).

9. A method according to any of the claims 2 to 8, wherein the first module (M01) sends (217) regularly to the second module (M02), the first observation (01) and the received third observation (03), and wherein the method further comprises the following initialization steps performed by the first module (M01):
- discovering (401) the second network element (NE2) as a neighbors,
- configuring (403) a minimum time duration between two successive collections of the first observation (O1),
- configuring (405) a minimum time duration between two successive sending of the first observation (O1) and the third observation (03), to the second module (M02),
- configuring (407) a minimum time duration between two successive updates of the first node (N11), the second node (N21) and the third node (N31) of the first dependency model (D1).

10. A method according to any of the claims 1 to 9, wherein the first dependency model (D1) is a Bayesian network.

11. A method according to any of the claims 1 to 10, wherein the first dependency model (D1) is provided to a root cause analysis module for identifying a fault in the communication network (CN).

12. A first network element (NE1) comprised in a communication network (CN), said first network element (NE1) being neighbor of a second network element (NE2) comprised in the communication network (CN), and said first network element (NE1) comprising a first module (MO1) that further comprises:
- means for establishing a first connection (LM1) between the first module (M01) and a second module (M02) comprised in the second network element (NE2),
- means for collecting regularly from a first function (FU1), a first observation (O1) comprising a first metric (M1) representative of a status of said first function (FU1) of the first network element (NE1),
- means for receiving, through the first connection (LM1), regularly from the second module (M02) a second observation (02) comprising a second metric (M2) representative of a status of a second function (FU2) of the second network element (NE2),
- means for updating regularly a first node (N11) and a second node (N21) of a first dependency model (D1) comprised in the first module (M01), said first node (N11) being updated with the first metric (M1) from the collected first observation (O1) and said second node (N21) being updated with the second metric (M2) from the received second observation (02), said first dependency model (D1) being representative of the status of the communication network (CN).

13. A first network element (NE1) according to claim 12, wherein the communication network (CN) further comprises a third network element (NE3), said third network element (NE3) being a neighbor of the first network element (NE1), and first module (MO1) further comprises:
- means for establishing a second connection (LM2) between the first module (M01) and a third module (M03) comprised in the third network element (NE3),
- means for receiving regularly from the third module (M03), a third observation (03) comprising a third metric (M3) representative of a status of a third function (FU3) of the third network element (NE3),
- means for updating a third node (N31) of the first dependency model (D1) said third node (N31) being updated with the third metric (M3) from the received third observation (03).

14. A first network element (NE1) according to claim 13, wherein the first module (M01) is further adapted to send regularly to the third module (M03), the first observation (O1) and the received second observation (02).

15. A first network element (NE1) according to any of the claims 13 to 14, wherein the first module (M01) is further adapted to send regularly to the second module (M02), the first observation (01) and the received third observation (03).

## Patentansprüche

1. Verteiltes Verfahren für die Überwachung des Status eines Kommunikationsnetzwerks (Communication Network, CN), ein erstes Netzwerkelement (NE1) und ein zweites Netzwerkelement (NE2) umfassend, wobei besagtes erstes Netzwerkelement (NE1) und besagtes zweites Netzwerkelement (NE2) benachbart sind und jeweils ein erstes Modul (M01) und ein zweites Modul (M02) umfassen, wobei besagtes Verfahren die folgenden, von dem ersten Modul (M01) ausgeführten Schritte umfasst:
- das Herstellen (201) einer ersten Verbindung (LM1) zwischen dem ersten Modul (M01) und dem zweiten Modul (M02),
- bezogen auf eine erste Funktion (FU1) des ersten Netzwerkelements (NE1) das regelmäßige Erfassen (203) einer ersten Beobachtung (Observation, 01), die eine erste Metrik (M1) umfasst, die einen Status besagter erster Funktion (FU1) angibt,
- das über die erste Verbindung (LM1) erfolgende, regelmäßige Empfangen (205) einer zweiten Beobachtung (O2) von dem zweiten Modul (M02), eine zweite Metrik (M2) umfassend, die einen Status einer zweiten Funktion (FU2) des zweiten Netzwerkelements (NE2) angibt,
- das regelmäßige Aktualisieren (207) eines ersten Knotens (N11) und eines zweiten Knotens (N21) eines ersten Dependenzmodells (D1), das im ersten Modul (MO1) enthalten ist, wobei besagter erster Knoten (N11) mit der ersten Metrik (M1) aus der eingeholten ersten Beobachtung (01) und besagter zweiter Knoten (N21) mit der zweiten Metrik (M2) von der empfangenen zweiten Beobachtung (02) aktualisiert wird, wobei besagtes erstes Dependenzmodell (D1) den Status des Kommunikationsnetzwerks (CN) repräsentiert.

2. Verfahren nach Anspruch 1, weiterhin die folgenden, von dem ersten Modul (MO1) ausgeführten Schritte umfassend:
- das Herstellen (209) einer zweiten Verbindung (LM2) mit einem dritten Modul (M03), das in einem dritten Netzwerkelement (NE3) enthalten ist, wobei besagtes drittes Netzwerkelement (NE3) dem ersten Netzwerkelement (NE1) benachbart ist,
- das regelmäßige Empfangen (211) einer dritten Beobachtung (03) von dem dritten Modul (M03), eine dritte Metrik (M3) umfassend, die einen Status einer dritten Funktion (FU3) des dritten Netzwerkelements (NE3) angibt,
- das regelmäßige Aktualisieren (213) eines dritten Knotens (N31) des ersten Dependenzmodells (D1), wobei besagter dritter Knoten (N31) mit der dritten Metrik (M3) aus der empfangenen, dritten Beobachtung (03) aktualisiert wird.

3. Verfahren nach Anspruch 2, wobei das erste Modul (MO1) an das dritte Modul (M03) regelmäßig die erste Beobachtung (O1) und die empfangene, zweite Beobachtung (02) sendet (215).

4. Verfahren nach Anspruch 2 oder 3, wobei das erste Modul (M01) an das zweite Modul (M02) regelmäßig die erste Beobachtung (01) und die empfangene dritte Beobachtung (03) sendet (217).

5. Verfahren nach Anspruch 4, wobei das zweite Modul (M02) einen ersten Knoten, einen zweiten Knoten und einen dritten Knoten eines zweiten Dependenzmodells (D2) aktualisiert, welches im zweiten Modul (M02) enthalten ist, wobei besagte Knoten jeweils mit der ersten Metrik (M1) aus der empfangenen, ersten Beobachtung (01) der zweiten Metrik (M2) aus der erfassten, zweiten Beobachtung (02) und der dritten Metrik (M3) aus der empfangenen, dritten Beobachtung (03) aktualisiert werden, wobei besagtes Dependenzmodell (D2) den Status des Kommunikationsnetzwerks (CN) repräsentiert.

6. Verfahren nach einem jeglichen der Ansprüche 2 bis 5, wobei die erste Beobachtung (01) weiterhin eine erste Kennung (Identifier, I1) und einen ersten Zeitstempel (Timestamp, T1), die zweite Beobachtung (02) weiterhin eine zweite Kennung (12) und einen zweiten Zeitstempel (T2) und die dritte Beobachtung (03) weiterhin eine dritte Kennung (I3) und einen dritten Zeitstempel (T3) umfasst.

7. Verfahren nach einem jeglichen der Ansprüche 2 bis 6, wobei die erste Beobachtung (01), die zweite Beobachtung (02) und die dritte Beobachtung (03) gemäß ihrer jeweiligen Relevanz gefiltert werden.

8. Verfahren nach Anspruch 7, wobei die erste Beobachtung (01) weiterhin eine erste Kennung (I1), die zweite Beobachtung (02) weiterhin eine zweite Kennung (12) und die dritte Beobachtung (03) weiterhin eine dritte Kennung (I3) umfasst, und wobei der erste Zeitstempel (T1), der zweite Zeitstempel (T2) und der dritte Zeitstempel (T3) Kriterien für die jeweilige Relevant der ersten Beobachtung (O1), der zweiten Beobachtung (02) und der dritten Beobachtung (03) sind.

9. Verfahren nach einem jeglichen der Ansprüche 2 bis 8, wobei das erste Modul (M01) an das zweite Modul (M02) regelmäßig die erste Beobachtung (01) und die empfangene, dritte Beobachtung (03) sendet (217) und wobei das Verfahren weiterhin die folgenden, vom ersten Modul (M01) ausgeführten Initialisierungsschritte umfasst:
- das Entdecken (401) des zweiten Netzwerkelements (NE2) als benachbart,
- das Konfigurieren (403) einer Mindestzeitdauer zwischen zwei aufeinanderfolgenden Erfassungen der ersten Beobachtung (01),
- das Konfigurieren (405) einer Mindestzeitdauer zwischen zwei sukzessiven Sendungen der ersten Beobachtung (01) und der dritten Beobachtung (03) an das zweite Modul (M02),
- das Konfigurieren (407) einer Mindestzeitdauer zwischen zwei sukzessiven Aktualisierungen des ersten Knotens (N11), des zweiten Knotens (N21) und des dritten Knotens (N31) des ersten Dependenzmodells (D1).

10. Verfahren nach einem der Ansprüche 1 bis 9, wobei das erste Dependenzmodell (D1) ein Bayessches Netz ist.

11. Verfahren nach einem jeglichen der Ansprüche 1 bis 10, wobei das erste Dependenzmodell (D1) einem Ursachenanalysemodul zur Verfügung gestellt wird, um einen Fehler in dem Kommunikationsnetzwerk (CN) zu identifizieren.

12. Ein erstes, in einem Kommunikationsnetzwerk (CN) enthaltenes Netzwerkelement (NE1), wobei besagtes erstes Netzwerkelement (NE1) einem zweiten, in dem Kommunikationsnetzwerk (CN) enthaltenen Netzwerkelement (NE2) benachbart ist, und wobei besagtes erstes Netzwerkelement (NE1) ein erstes Modul (M01) umfasst, welches weiterhin umfasst:
- Mittel für das Herstellen einer ersten Verbindung (LM1) zwischen dem ersten Modul (M01) und einem zweiten Modul (M02), welches in dem zweiten Netzwerkelement (NE2) enthalten ist,
- Mittel, um von einer ersten Funktion (FU1) regelmäßig eine erste Beobachtung (O1) zu erfassen, die eine erste Metrik (M1) umfasst, die einen Status besagter erster Funktion (FU1) des ersten Netzwerkelements (NE1) angibt,
- Mittel für das über die erste Verbindung (LM1) erfolgende, regelmäßige Empfangen einer zweiten Beobachtung (02) von dem zweiten Modul (M02), eine zweite Metrik (M2) umfassend, die einen Status einer zweiten Funktion (FU2) des zweiten Netzwerkelements (NE2) angibt,
- Mittel für das regelmäßige Aktualisieren eines ersten Knotens (N11) und eines zweiten Knotens (N21) eines ersten Dependenzmodells (D1), das im ersten Modul (M01) enthalten ist, wobei besagter erster Knoten (N11) mit der ersten Metrik (M1) aus der eingeholten ersten Beobachtung (01) und besagter zweiter Knoten (N21) mit der zweiten Metrik (M2) von der empfangenen zweiten Beobachtung (02) aktualisiert wird, wobei besagtes erstes Dependenzmodell (D1) den Status des Kommunikationsnetzwerks (CN) repräsentiert.

13. Ein erstes Netzwerkelement (NE1) nach Anspruch 12, wobei das Kommunikationsnetzwerk (CN) weiterhin ein drittes Netzwerkelement (NE3) umfasst, wobei besagtes drittes Netzwerkelement (NE3) dem ersten Netzwerkelement (NE1) benachbart ist und das erste Modul (MO1) weiterhin umfasst:
- Mittel für das Herstellen einer zweiten Verbindung (LM2) zwischen dem ersten Modul (M01) und einem dritten Modul (M03), welches in dem dritten Netzwerkelement (NE3) enthalten ist,
- Mittel für das regelmäßige Empfangen einer dritten Beobachtung (03) von dem dritten Modul (M03), eine dritte Metrik (M3) umfassend, die einen Status einer dritten Funktion (FU3) des dritten Netzwerkelements (NE3) angibt,
- Mittel für das Aktualisieren eines dritten Knotens (N31) des ersten Dependenzmodells (D1), wobei besagter dritter Knoten (N31) mit der dritten Metrik (M3) aus der empfangenen, dritten Beobachtung (03) aktualisiert wird.

14. Ein erstes Netzwerkelement (NE1) nach Anspruch 13, wobei das erste Modul (MO1) weiterhin dafür ausgelegt ist, um an das dritte Modul (M03) regelmäßig die erste Beobachtung (01) und die empfangene, zweite Beobachtung (02) zu senden.

15. Ein erstes Netzwerkelement (NE1) nach einem jeglichen der Ansprüche 13 bis 14, wobei das erste Modul (M01) weiterhin dafür ausgelegt ist, um an das zweite Modul (M02) regelmäßig die erste Beobachtung (O1) und die empfangene, dritte Beobachtung (03) zu senden.

## Revendications

1. Un procédé réparti pour la surveillance de l'état d'un réseau de communication (CN) comprenant un premier élément de réseau (NE1) et un deuxième élément de réseau (NE2), lesdits premier élément de réseau (NE1) et deuxième élément de réseau (NE2) étant voisins et comprenant respectivement un premier module (MO1) et un deuxième module (M02), ledit procédé comprenant les étapes suivantes exécutées par le premier module (MO1):
- établissement (201) d'une première connexion (LM1) entre le premier module (MO1) et le deuxième module (M02),
- collecte (203) régulière, à partir d'une première fonction (FU1) du premier élément de réseau (NE1), d'une première observation (01) comprenant un premier indice (M1) correspondant à un état de ladite première fonction (FU1),
- réception régulière (205), par l'intermédiaire de la première connexion (LM1), à partir du deuxième module (M02), d'une deuxième observation (02) comprenant un deuxième indice (M2) correspondant à un statut d'une deuxième fonction (FU2) du deuxième élément de réseau (NE2),
- mise à jour (207) régulière d'un premier noeud (N11) et d'un deuxième noeud (N21) d'un premier modèle de dépendance (D1) compris dans le premier module (MO1), ledit premier noeud (N11) étant mis à jour avec le premier indice (M1) issu de la première observation (01) collectée, et ledit deuxième noeud (N21) étant mis à jour avec le deuxième indice (M2) issu de la deuxième observation (02) reçue, ledit modèle de dépendance (D1) correspondant au statut du réseau de communication (CN).

2. Un procédé selon la revendication 1, comprenant en outre les étapes suivantes exécutées par le premier module (MO1) :
- établissement (209) d'une deuxième connexion (LM2) avec un troisième (M03) compris dans un troisième élément de réseau (NE3), ledit troisième élément de réseau (NE3) étant un voisin du premier élément de réseau (NE1),
- réception (211) régulière, à partir du troisième module (MO3), d'une troisième observation (03) comprenant un troisième indice (M3) correspondant à un état d'une troisième fonction (FU3) du troisième élément de réseau (NE3),
- mise à jour (213) régulière d'un troisième noeud (N31) du premier modèle de dépendance (D1), ledit troisième noeud (N31) étant mis à jour avec le troisième indice (M3) issu de la troisième observation (03) reçue.

3. Un procédé selon la revendication 2, dans lequel le premier module (MO1) envoie (215) régulièrement au troisième module (MO3), la première observation (01) et la deuxième observation reçue (02).

4. Un procédé selon la revendication 2 ou la revendication 3, dans lequel le premier module (MO1) envoie (217) régulièrement au deuxième module (M02), la première observation (01) et la troisième observation (03) reçue.

5. Un procédé selon la revendication 4, dans lequel le deuxième module (M02) met à jour (219) un premier noeud, un deuxième noeud et un troisième noeud d'un deuxième modèle de dépendance (D2) compris dans le deuxième module (M02), lesdits noeuds étant respectivement mis à jour avec le premier indice (M1) issu de la première observation (01) reçue, le deuxième indice (M2) issu de la deuxième observation (02) collectée, et avec le troisième indice (M3) issu de la troisième observation (03) reçue, ledit deuxième modèle de dépendance (D2) correspondant à l'état du réseau de communication (CN).

6. Un procédé selon l'une quelconque des revendications 2 à 5, dans lequel la première observation (01) comprend en outre un premier identifiant (11) et une première estampille temporelle (T1), la deuxième observation (02) comprend en outre un deuxième identifiant (I2) et une deuxième estampille temporelle (T2) et la troisième observation (03) comprend en outre un troisième identifiant (I3) et une troisième estampille temporelle (T3).

7. Un procédé selon l'une quelconque des revendications 2 à 6, dans lequel la première observation (01), la deuxième observation (02) et la troisième observation (03) sont filtrées en fonction de leurs pertinences respectives.

8. Un procédé selon la revendication 7, dans lequel la première observation (01) comprend en outre un premier identifiant (11), la deuxième observation (02) comprend en outre un deuxième identifiant (I2), la troisième observation comprend en outre un troisième identifiant (13), et dans lequel la première estampille temporelle (T1), la deuxième estampille temporelle (T2) et la troisième estampille temporelle (T3) sont des critères pour les pertinences respectives de la première observation (01), la deuxième observation (02) et la troisième observation (03).

9. Un procédé selon l'une quelconque des revendications 2 à 8, dans lequel le premier module (MO1) envoie (217) régulièrement au deuxième module (M02) la première observation (01) et la troisième observation (03) reçue, et dans lequel le procédé comprend en outre les étapes d'initialisation suivantes exécutées par le premier module (MO1) :
- découverte (401) du deuxième élément de réseau (NE2) en tant que voisin,
- configuration (403) d'une durée de temps minimum entre deux collectes successives de la première observation (01),
- configuration (405) d'une durée de temps minimum entre deux envois successifs de la première observation (01) et de la troisième observation (03) au deuxième module (M02),
- configuration (407) d'une durée de temps minimum entre deux mises à jour successives du premier noeud (N11), du deuxième noeud (N21) et du troisième noeud (N31) du premier modèle de dépendance (D1).

10. Un procédé selon l'une quelconque des revendications 1 à 9, dans lequel le premier modèle de dépendance (D1) est un réseau Bayésien.

11. Un procédé selon l'une quelconque des revendications 1 à 10, dans lequel le premier modèle de dépendance (D1) est pourvu d'un module d'analyse de cause racine pour l'identification d'une défaillance dans le réseau de communication (CN).

12. Un premier élément de réseau (NE1) compris dans un réseau de communication (CN), ledit premier élément de réseau (NE1) étant voisin d'un deuxième élément de réseau (NE2) compris dans le réseau de communication (CN), et ledit premier élément de réseau (NE1) comprenant un premier module (MO1) qui comprend en outre :
- des moyens pour l'établissement d'une première connexion (LM1) entre le premier module (MO1) et un deuxième module (M02) compris dans le deuxième élément de réseau (NE2),
- des moyens pour la collecte régulière, à partir d'une première fonction (FU1), d'une première observation (01) comprenant un premier indice (M1) correspondant à un état de ladite première fonction (FU1) du premier élément de réseau (NE1),
- des moyens pour la réception régulière, par l'intermédiaire de la première connexion (LM1), à partir du deuxième module (M02), d'une deuxième observation (02) comprenant un deuxième indice (M2) correspondant à un état d'une deuxième fonction (FU2) du deuxième élément de réseau (NE2),
- des moyens pour la mise à jour régulière d'un premier noeud (N11) et d'un deuxième noeud (N21) d'un premier modèle de dépendance (D1) compris dans le premier module (MO1), ledit premier noeud (N11) étant mis à jour avec le premier indice (M1) issu de la première observation (01) collectée et ledit deuxième noeud (N21) étant mis à jour avec le deuxième indice (M2) issu de la deuxième observation (O2) reçue, ledit modèle de dépendance (D1) correspondant à l'état du réseau de communication (CN).

13. Un premier élément de réseau (NE1) selon la revendication 12, dans lequel le réseau de communication (CN) comprend en outre un troisième élément de réseau (NE3), ledit troisième élément de réseau (NE3) étant un voisin du premier élément de réseau (NE1) et le premier module (MO1) comprend en outre :
- des moyens pour l'établissement d'une deuxième connexion (LM2) entre le premier module (MO1) et un troisième module (M03) compris dans le troisième élément de réseau (NE3),
- des moyens pour la réception régulière à partir du troisième module (M03), d'une troisième observation (03) comprenant un troisième indice (M3) correspondant à un état d'une troisième fonction (FU3) du troisième élément de réseau (NE3),
- des moyens pour la mise à jour d'un troisième noeud (N31) du premier modèle de dépendance (D1), ledit troisième noeud (N31) étant mis à jour avec le troisième indice (M3) issu de la troisième observation (03) reçue.

14. Un premier élément de réseau (NE1) selon la revendication 13, dans lequel le premier module (MO1) est conçu en outre pour l'envoi régulier au troisième module (M03) de la première observation (O1) et de la deuxième observation (02) reçue.

15. Un premier élément de réseau (NE1) selon l'une quelconque des revendications 13 à 14, dans lequel le premier module (MO1) est conçu en outre pour l'envoi régulier au deuxième module (M02) de la première observation (01) et de la troisième observation (03) reçue.
